Europäisches Patentamt

European Patent Office

Office européen des brevets

(11) Veröffentlichungsnummer: **0 197 385 B1**

# EUROPÄISCHE PATENTSCHRIFT

(45) Veröffentlichungstag der Patentschrift: **11.11.92**

(51) Int. Cl.5: **G10K 11/16**, F16F 7/10

(21) Anmeldenummer: **86103786.9**

(22) Anmeldetag: **20.03.86**

(54) **Schalldämmeinrichtung.**

(30) Priorität: **25.03.85 DE 3510809**

(43) Veröffentlichungstag der Anmeldung:
**15.10.86 Patentblatt 86/42**

(45) Bekanntmachung des Hinweises auf die
Patenterteilung:
**11.11.92 Patentblatt 92/46**

(84) Benannte Vertragsstaaten:
**AT BE CH DE FR GB IT LI LU NL SE**

(56) Entgegenhaltungen:
**GB-A- 1 295 171**

**PATENT ABSTRACTS OF JAPAN, Band 7, Nr.
254 (M-255)[1399], 11. November 1983; & JP-
A-58 137 634**

**Tascenbuch der Technischen Akustik,
Heckl/Müller, Springer Verlag, 1975, Seiten
458-467**

(73) Patentinhaber: **Müller-BBM GmbH
Robert Koch Strasse 11
W-8033 Planegg(DE)**

(72) Erfinder: **Saalfeld, Michael
Hermann-Paul-Strasse 12a
W-8000 München 50(DE)**

(74) Vertreter: **Reinhard, Skuhra, Weise
Friedrichstrasse 31
W-8000 München 40(DE)**

## Beschreibung

Die Erfindung betrifft eine Schalldämmeinrichtung mit einer Federelementanordnung und mit einem Zwischenelement. In Patent Abstracts of Japan, Band 7, Nr. 254 (M -255) [1399], (JP-A 58 137 634) ist eine Schalldämmeinrichtung beschrieben, die aus einem Zwischenelement aus Kunstharz und beidseitig des Zwischenelements angeordneten, schwingungsdämpfenden Stahlplatten besteht, welche durch das Zwischenelement fest miteinander verbunden sind. Aus der GB-A- 1 295 171 (z. B. Fig. 4) ist eine schwingungsdämpfende Anordnung bekannt, bei welcher zwei Federabschnitte unter Zwischenschaltung einer Masse zur Schwingungsdämpfung eines Körpers vorgesehen sind.

Schalldämmungen werden üblicherweise nach dem Resonanz-Verfahren vorgenommen, das jedoch nur für Schallquellen mit geringen dynamischen Erregerkräften geeignet ist. Nicht ausreichend gedämmter Schall verursacht häufig Pegelüberschreitungen von mehr als 10 dB (A), da eine einfache elastische Lagerung eine zu geringe Wirksamkeit zeigt. Bei derart großen Überschreitungen des zulässigen Grenzwertes reicht es nicht aus, die Elastizität der Federelemente oder die Impedanz der Auflagerpunkte zu erhöhen. Eine ausreichende Schallverringerung läßt sich dann häufig nur durch eine doppelt elastische Lagerung der Schallquelle erreichen.

Derartige Lagerungen spielen eine wichtige Rolle bei der elastischen Lagerung von schweren schallerzeugenden Vorrichtungen, wie beispielsweise Aufzugsanlagen, Kolbenkompressoren, Schlagscheren, Kolbenpumpen, großen Verbrennungsmotoren, Exzenterpressen, etc.. Dabei war es bisher üblich, das Aggregat unter Verwendung einer ersten Federelementanordnung auf ein Stahlbeton-Zwischenfundament zu lagern, das sich über die gesamte Unterseite des Aggregats erstreckt und das sich seinerseits elastisch über eine zweite Federelementanordnung auf dem Boden bzw. einem massiven bodenseitigen Sockel abstützt.

Die Herstellung und der Einbau einer derartigen doppelt elastischen Lagerung gestaltet sich relativ aufwendig, da zunächst ein für das Aggregat geeignetes schweres Stahlbetonfundament betoniert und gegebenenfalls an die Einbaustelle transportiert werden muß, da häufig schwierige Anpassungsmaßnahmen getroffen werden müssen und der Einbauplatz, insbesondere für eine nachträgliche doppelt elastische Lagerung nicht ausreicht. Nachteilig ist zudem, daß für jedes Aggregat ein individuell auf die Masse des Aggregates abgestimmtes Stahlbeton-Zwischenfundament nebst entsprechend zugeordneten Federelementen bereitgestellt werden muß.

Der Erfindung liegt die Aufgabe zugrunde, eine Schalldämmeinrichtung zu schaffen, die problemlos zu handhaben ist und die für die Schalldämmung unterschiedlicher Aggregate wirkungsvoll einsetzbar ist.

Diese Aufgabe wird erfindungsgemäß durch die Merkmale im kennzeichnenden Teil des Patentanspruchs 1 und durch die Merkmale im kennzeichnenden Teil des Patentanspruchs 2 gelöst.

Weitere Ausgestaltungen der Schalldämmeinrichtung ergeben sich aus den Unteransprüchen.

Die Erfindung schafft eine Schalldämmeinrichtung, die nicht flächig für ein bestimmtes Aggregat, sondern punktuell für verschiedene Aggregate auch nachträglich in entsprechend gewünschter Anzahl zur Erzielung der erforderlichen Dämmung eingesetzt werden kann. Die Herstellung ist ebenso wie der Transport und das entsprechende Anpassen an die örtlichen Gegebenheiten problemlos. Die Installation kann aufgrund der möglichen kleinen Ausbildung des Punktlagerelements ohne Platzprobleme leicht durchgeführt werden. Aufgrund der problemlosen Handhabung kann das Anbringen des Punktlagerelementes zudem ohne weiteres von Nichtfachleuten vorgenommen werden. Die vorgesehene Veränderung des Gewichts des Zwischenelements durch wenigstens ein Zusatzgewicht ermöglicht in vorteilhafter Weise eine optimale Massenabstimmung zur Erzielung der gewünschten Dämmung.

Das Zwischenelement kann massiv und aus jedem ausreichend stabilen Material sein. Es besteht bevorzugt aus einer stabilen, plattenförmigen hohlen Stahlkonstruktion, die mit Bleischrot befüllbar ist. Hierdurch läßt sich eine besonders günstige individuelle Massenabstimmung für jedes Punktlagerelement eines körperschalzudämmenden Aggregates zur Anpassung an die jeweiligen Gegebenheiten erzielen.

Alternativ oder gleichzeitig besitzt das Zwischenelement befestigbare Zusatzgewichte mit geringerer Höhe, um die individuelle Wirksamkeit der Schalldämmeinrichtung an die jeweiligen Bedürfnisse unter Wahrung einer problemlosen Handhabung anpassen zu können. Bei einer bevorzugten Ausgestaltung der Erfindung sind die Zusatzgewichte jeweils im Bereich der Wirkungslinien der an den gegenüberliegenden Seiten des Zwischenelements angeordneten Federelementanordnungen befestigbar. Die Zusatzgewichte bestehen aus jedem ausreichend schweren Material, bevorzugt aus Bleiplatten. Die Bleiplatten haben vorzugsweise verschließbare Durchgangsbohrungen zu dem hohlen Zwischenelement.

Die Federelementanordnungen sind aus einem Material mit geeigneter Elastizität gebildet, z.B. Gummi oder eine beliebig geformte Stahlfeder. Bei bevorzugten Ausbildungsformen bestehen die Federelementanordnungen jeweils aus elastischen Schichten mit vorzugsweise unterschiedlicher Dik-

ke oder jeweils aus einem Gummi-Metall-Element, das aus einem Gummielement mit anvulkanisierten Befestigungsmetallscheiben besteht, oder aus einer Kombination der vorgenannten Ausbildungsformen.

Nach einer bevorzugten Ausgestaltung der Erfindung sind auf einer Seite des plattenförmigen Zwischenelementes im Randbereich mehrere gleichmäßig voneinander beabstandete Gummi-Metall-Elemente und an der gegenüberliegenden Seite ein zu diesen mittig angeordnetes Gummi-Metall-Element vorgesehen, wobei das mittig angeordnete Gummi-Metall-Element bevorzugt ein Volumen besitzt, das etwa dem Gesamtvolumen der Gummielemente der übrigen Gummi-Metall-Element entspricht.

Das Zwischenelement besteht vorzugsweise aus einer quadratischen Platte, in deren Eckenbereichen jeweils ein Gummi-Metall-Element und auf deren gegenüberliegender Seite in der Mitte ein Gummi-Metall-Element angeordnet ist, wobei eine Bleiplatte zwischen den Gummi-Metall-Elementen und jeweils eine Bleiplatte neben dem einzelnen Gummi-Metall-Element befestigt sind, und wobei die Bleiplatten wenigstens zwei Außenflächen besitzen, die in einer Ebene mit Außenseiten der Zwischenelementplatte liegen.

Weitere Einzelheiten, Merkmale und Vorteile der Erfindung sind dem anschließenden Beschreibungsteil zu entnehmen, in dem Ausführungsbeispiele der Erfindung unter Bezugnahme auf die beigefügten Zeichnungen näher erläutert werden. Es zeigen:

Fig. 1     eine Draufsicht auf eine Körperschall-Dämmeinrichtung gemäß der Erfindung;

Fig. 2     eine Vorderansicht der in Fig. 1 dargestellten Körperschall-Dämmeinrichtung;

Fig. 3     einen vertikalen Schnitt längs der Schnittlinie III-III in Fig. 1;

Fig. 4     eine Unteransicht der Körperschall-Dämmeinrichtung gemäß Fig. 1;

Fig. 5     eine Perspektivdarstellung einer abgewandelten Ausführungsform der Schalldämmeinrichtung; und

Fig. 6     eine graphische Darstellung zur Erläuterung der Eigenfrequenzen der erfindungsgemäßen Schalldämmeinrichtung bei unterschiedlichen Belastungen.

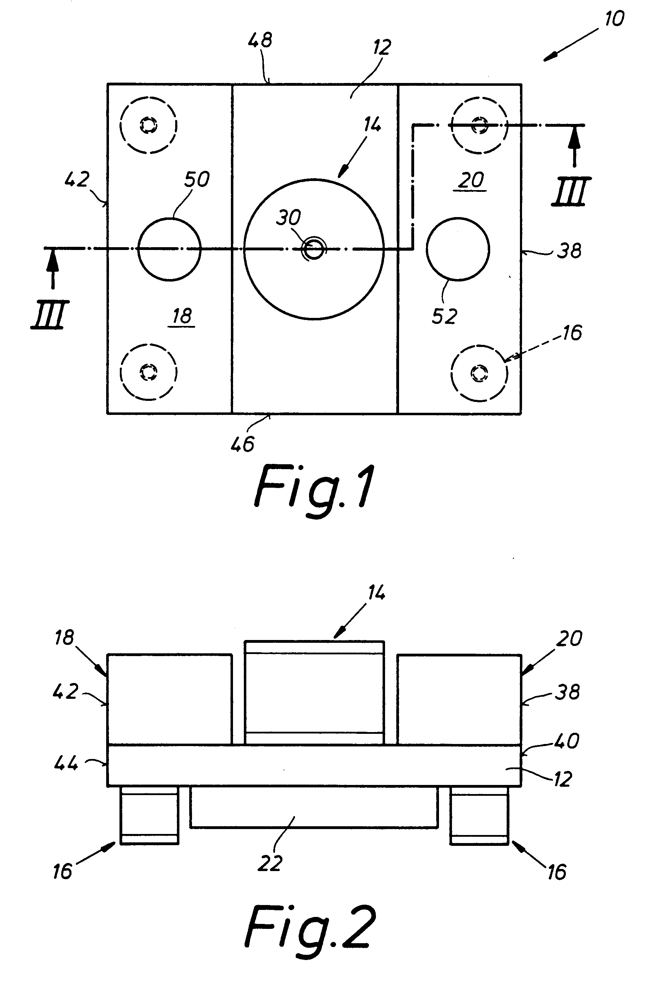

Das in Fig. 1 dargestellte Ausführungsbeispiel einer Körperschall-Dämmeinrichtung besteht aus einem Punktlagerelement 10, das ein Zwischenelement 12, Federelementanordnungen 14 und 16 sowie Zusatzgewichte 18, 20 und 22 aufweist.

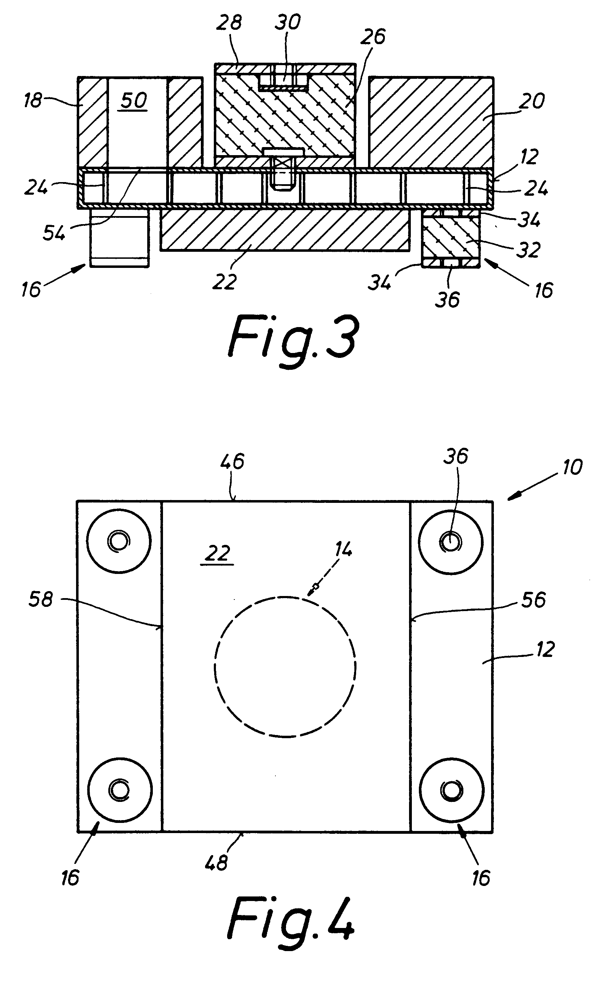

Das Zwischenelement 12 hat die Form einer quadratischen Platte und besteht aus einer hohlen Stahlkonstruktion, die, wie aus Fig. 3 zu entnehmen ist, mittels Versteifungselementen 24 ausgesteift ist. Auf dem Zwischenelement 12 ist mittig die obere Federlementanordnung 14 befestigt, die aus einem einzelnen Gummi-Metall-Element besteht, das sich aus einem zylinderförmigen Gummielement 26 und jeweils stirnseitig anvulkanisierten Befestigungsmetallscheiben 28 zusammensetzt, wobei jede Befestigungsmetallscheibe 28 eine zentrale Gewindebohrung 30 zu Montagezwecken aufweist. Das Zwischenelement kann alternativ auch massiv ausgebildet sein.

Die an der gegenüberliegenden Seite des Zwischenelements 12 befestigte Federelementanordung 16 besteht aus insgesamt vier Gummi-Metall-Element, die jeweils in den Eckenbere ichen des quadratischen Zwischenelements 12 befestigt sind. Die Gummi-Metall-Element der Federelementanordnung 16 bestehen jeweils aus einem zylinderförmigen Gummielement 32, an dessen Stirnseiten jeweils Befestigungsmetallscheiben 34 mit einer zentralen Gewindebohrung 36 anvulkanisiert sind. Die Gummi-Metall-Element der Federelementanordnungen 14 und 16 sind jeweils in nicht dargestellter Weise mittels an den Zwischelementen befestigten Schraubbolzen an dem Zwischenelement 12 angebracht.

Auf dem Zwischenelement 12 sind als Zusatzgewichte 18 und 20 quaderförmige Bleiplatten befestigt. Die Bleiplatten sind parallel zueinander angeordnet und erstrecken sich über die gesamte Seitenlänge des Zwischenelements 12. Dabei liegt die seitliche Außenfläche 38 des Zusatzgewichts 20 in einer Ebene mit einer seitlichen Außenfläche 40, und die seitliche Außenfläche 42 des Zusatzgewichts 18 liegt in einer Ebene mit der seitlichen Außenfläche 44 des Zwischenelements. Die stirnseitigen Flächen der Zusatzgewichte 18 und 20 liegen jeweils mit der vorderen und hinteren Seitenaußenfläche 46 bzw. 48 des Zwischenelements 12 in einer Ebene.

Die Zusatzgewichte 18 und 20 weisen jeweils verschließbare Durchgangsbohrungen 50 bzw. 52 auf, die mit entsprechenden Bohrungen in dem Zwischenelement 12 fluchten. Eine dieser am Zwischenelement vorgesehenen Bohrungen ist in Fig. 3 mit 54 bezeichnet. Durch die verschließbaren Öffnungen 50 und 52 kann in das Innere des hohlen Zwischenelements 12 Bleischrot eingefüllt werden, um eine bestimmte Massenabstimmung herzustellen. Die Form und Größe sowie das Gewicht der Zusatzgewichte sind nicht auf die dargestellte Form beschränkt, sondern können je nach Bedarf abgewandelt werden.

Unterhalb des Zwischenelements 12 ist ein Zusatzgewicht 22 in form einer Bleiplatte in nicht dargestellter Weise befestigt. Das Zusatzgewicht 22 besitzt einen rechteckigen Querschnitt und erstreckt sich über die gesamte Länge des Zwi schenelements 22. Die Stirnflächen des Zusatzgewichts liegen in einer Ebene mit den seitlichen Außenflächen 46 bzw. 48 des Zwischenelements 12. Die Seitenflächen 56 bzw. 58 sind von den Federelementanordnungen 16 geringfügig beabstandet.

Die dargestellte Schalldämmeinrichtung erreicht betriebsfertig ein Gewicht von ca. 80 kg. Auf vier derartigen Elementen kann beispielsweise ein Aggregat von 800 kg aufgestellt werden. Die Höhe der gezeigten Einrichtung beträgt etwa 110 m, und das quadratische Zwischenelement hat eine Seitenlänge von etwa 300 mm.

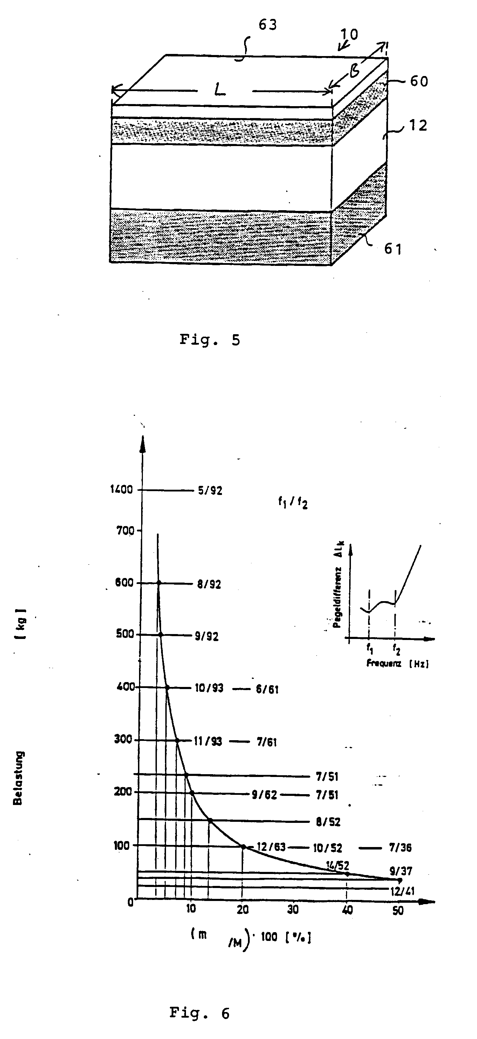

Gemäß einer alternativen, in Verbindung mit Fig. 5 und 6 zu beschreibenden Ausgestaltungen der Erfindung ist die Schalldämmeinrichtung als Punktlagerelement ausgebildet, bei dem der massiven oder hohlen Zwischenplatte 12 beiderseits Federelementanordnungen in Form jeweils einer elastischen Sicht 60, 61 durch Verklebung befestigt sind, wobei die im Verwendungsfall nach oben weisende obere elastische Schicht 60 mit einer oberseitig angeklebten Druckverteilungsplatte 63 versehen ist. Die Dicke der oberen elastischen Schicht 60 ist kleiner als die der unteren elastischen Schicht 61, wobei die gegenseitigen Anlage- bzw. Verbindungsflächen der elastischen Schichten 60, 61, der Zwischenplatte 12 und der Druckverteilungsplatte 63 vorzugsweise gleich groß sind und beispielsweise Rechteckabmessungen von 21 x 14 mm aufweisen. Diese Ausbildungsform ist besonders vorteilhaft, weil keine Anpassung von Anschlüssen an einem zu lagernden Aggregat erforderlich ist. Es läßt sich zudem mit einem Gesamtgewicht von etwa 20 kg herstellen und damit einfach handhaben, wobei bei Versuchen Luftschall-Einfügungsdämmungen mit Schallpegelsenkungen bis zu ca. 35 dB (A) erreicht wurden.

Zur leichteren Handhabung für den Transport und den Einbau der Dämmeinrichtung kann diese auch aus Einzelteilen bestehen, die vor Ort zusammengebaut werden. Bei Bedarf können bei größeren Aggregatgewichten auch weitere Punktlagerelemente angeordnet werden.

Die in Fig. 5 dargestellte Schalldämmeinrichtung hat einen Verlustfaktor $\eta > 0,1 < 0,3$. Das Verhältnis von Länge zu Breite der blockförmigen Schalldämmeinrichtung beträgt vorzugsweise L:B ~1,5 und das Verhältnis der Dicke der oberen elastischen Schicht 20 zur Dicke der unteren elastischen Schicht 61 ca. 0,5.

Die erste Eigenfrequenz der Zwischenmasse soll > 1,5 KHz betragen, ferner sollen die Nick- und Kippschwingungen der Zwischenmasse 12 in der Nähe der vertikalen Eigenfrequenz der Zwischenmasse liegen.

Für die elastischen Schichten 60, 61 werden Materialien, vorzugsweise Polyurethanschaum eingesetzt mit einer 10 - 40 ShA.

Vorteilhaft ist die Einhaltung der Proportionen von Länge zu Breite, d.h. das Verhältnis L:B ungefähr 1,5 und das Verhältnis der Schichdicke der Schicht 60 zur Schicht 61 bei ca. 0,5. Mit diesen Kriterien läßt sich die Schalldämmeinrichtung für nahezu beliebig hohe Belastungen konzipieren bzw. größenmäßig verändern. Fig. 6 zeigt eine graphische Darstellung der Belastung im Bereich von etwa 50 kg bis 1400 kg und die dazu gehörigen Eigenfrequenzen $f_1/f_2$.

In Fig. 5 sind entlang der Abszisse die Werte für m/M x 100 in % aufgetragen. Mit m ist hierbei die Zwischenmasse der Schalldämmeinrichtung bezeichnet, die bei einer bevorzugten Ausführungsform 20 kg beträgt, während mit M das auf die Schalldämmeinrichtung wirkende Maschinengewicht, d.h. die Belastung angibt. Entlang der Ordinate ist die Belastung der Schalldämmeinrichtung aufgetragen. Fig. 6 zeigt eine graphische Darstellung für eine bevorzugte Ausführungsform der erfindungsgemäßen Schalldämmeinrichtung und die sich dabei ergebenden vorteilhaften Wirkungen.

Die in Verbindung mit Fig. 5 und 6 beschriebene Schalldämmeinrichtung läßt sich einfach herstellen, einbauen und zur Optimierung der Schalldämmung unterschiedlicher Aggregate, wie beispielsweise für die Lagerung von Aufzugsanlagen, Kolbenkompressoren, Schlagscheren, Kolbenpumpen, großen Verbrennungsmotoren, Exzenterpressen etc. wirkungsvoll einsetzen.

Durch das Vorsehen unterschiedlicher Federelementanordnungen im Zusammenhang mit etwa drei unterschiedlichen Zwischenelementen werden alle in Praxis anfallenden Dämmschallprobleme sicher und zuverlässig gelöst.

**Patentansprüche**

1. Schalldämmeinrichtung mit einer Federelementanordnung (14, 16) und mit einem Zwischenelement (12),
 **dadurch gekennzeichnet,**
 daß das Zwischenelement (12) plattenförmige Gestalt aufweist,
 daß die Federelementanordnung (14, 16) aus einem mittig auf dem plattenförmigen Zwischenelement (12) angeordneten ersten Federelement (14) und auf der zum ersten Federelement (14) gegenüberliegenden Seite des plattenförmigen Zwischenelements (12) vorgesehenen zweiten Federelementen (16) besteht, die in den Eckbereichen des plattenförmigen Zwischenelements (12) angeordnet sind, und daß auf dem plattenförmigen Zwischenelement (12) seitlich des ersten Federelements (14) wenigstens ein Zusatzgewicht (18, 20) angeordnet ist, wobei die Höhe des ersten Federlements (14) größer als die Höhe jedes Zusatzgewichts (18, 20, 22) dimensioniert ist.

2. Schalldämmeinrichtung mit einer ersten und zweiten Federelementanordnung (60, 61) und mit einem Zwischenelement (12),
**dadurch gekennzeichnet,**
daß das Zwischenelement (12) plattenförmige Gestalt besitzt,
daß jede Federelementanordnung aus einem Federelement (60, 61) besteht, von denen das eine Federelement (60) auf der oberen Fläche des plattenförmigen Zwischenelements (12) und das zweite Federelement auf der unteren Fläche des plattenförmigen Zwischenelements (12) angeordnet ist,
und daß die beiden Federelemente (60, 61) jeweils durch eine Schicht aus elastischem Material mit vorzugsweise 10 bis 40 ShA gebildet sind.

3. Schalldämmeinrichtung nach Anspruch 1,
**dadurch gekennzeichnet,**
daß eines der Zusatzgewichte (22) an der Unterseite des plattenförmigen Zwischenelementes (12) angeordnet ist.

4. Schalldämmeinrichtung nach Anspruch 1,
**dadurch gekennzeichnet,**
daß das Zwischenelement (12) aus einer stabilen, plattenförmigen, hohlen Stahlkonstruktion besteht, die mit Bleischrot als Zusatzgewicht befüllbar ist.

5. Schalldämmeinrichtung nach Anspruch 2,
**dadurch gekennzeichnet,**
daß das auf der oberen Fläche des plattenförmigen Zwischenelements (12) befindliche Federelement (60) eine Druckverteilungsplatte (63) trägt.

6. Schalldämmeinrichtung nach Anspruch 2 oder 5,
**dadurch gekennzeichnet,**
daß das auf der oberen Fläche des plattenförmigen Zwischenlementes (12) befindliche Federelement (60) eine kleinere Dicke aufweist als das unter dem plattenförmigen Zwischenlement (12) angeordnete Federlement (61).

**Claims**

1. Sound-damping device having a spring element arrangement (14, 16) and having an intermediate element (12),
characterized in that
the intermediate element (12) is shaped like a plate,

that the spring element arrangement (14, 16) comprises a first spring element (14) centrally disposed on the plate-like intermediate element (12) and two spring elements (16) provided on the opposite side of the plate-like intermediate element (12) to the first spring element (14) and disposed in the corner regions of the plate-like intermediate element (12),
and that at least one additional weight (18, 20) is disposed on the plate-like intermediate element (12) laterally of the first spring element (14), with the height of the first spring element (14) being greater than the height of each additional weight (18, 20, 22).

2. Sound-damping device having a first and second spring element arrangement (60, 61) and having an intermediate element (12),
characterized in that
the intermediate element (12) is shaped like a plate,
that each spring element arrangement comprises a spring element (60, 61), of which the one spring element (60) is disposed on the top surface of the plate-like intermediate element (12) and the second spring element is disposed on the bottom surface of the plate-like intermediate element (12),
and that the two spring elements (60, 61) are each formed by a layer of elastic material preferably of 10 to 40 ShA.

3. Sound-damping device according to claim 1,
characterized in that
one of the additional weights (22) is disposed on the underside of the plate-like intermediate element (12).

4. Sound-damping device according to claim 1,
characterized in that
the intermediate element (12) comprises a stable, plate-like, hollow steel structure which may be filled with lead shot as an additional weight.

5. Sound-damping device according to claim 2,
characterized in that
the spring element (60) situated on the top surface of the plate-like intermediate element (12) carries a pressure-distributing plate (63).

6. Sound-damping device according to claim 2 or 5,
characterized in that
the spring element (60) situated on the top surface of the plate-like intermediate element (12) has a reduced thickness compared to that of the spring element (61) disposed below the plate-like intermediate element (12).

**Revendications**

1. Dispositif d'atténuation sonore comportant un système d'élément élastique (14, 16) et un élément intermédiaire (12),

caractérisé

en ce que l'élément intermédiaire (12) a une structure en forme de plaque,

en ce que le système d'élément élastique (14, 16) est constitué d'un premier élément élastique (14), disposé sur l'élément intermédiaire (12) en forme de plaque en son centre, et de seconds éléments élastiques (16) qui sont prévus sur la face de l'élément intermédiaire (12) en forme de plaque qui est située à l'opposé du premier élément élastique (14) et qui sont disposés dans les angles de l'élément intermédiaire (12) en forme de plaque

et en ce qu'au moins une masse additionnelle (18, 20) est disposée sur l'élément intermédiaire (12) en forme de plaque sur le côté du premier élément élastique (14), la hauteur du premier élément élastique (14) étant supérieure à la hauteur de chaque masse additionnelle (18, 20, 22).

2. Dispositif d'atténuation sonore comportant un premier et un second systèmes d'élément élastique (60, 61) et un élément intermédiaire (12),

caractérisé

en ce que l'élément intermédiaire (12) a une structure en forme de plaque,

en ce que chaque système d'élément élastique est constitué d'un élément élastique (60, 61), l'un (60) de ces éléments élastiques étant disposé sur la surface supérieure de l'élément intermédiaire (12) en forme de plaque et le second élément élastique étant disposé sur la surface inférieure de cet élément intermédiaire (12) en forme de plaque

et en ce que les deux éléments élastiques (60, 61) sont constitués chacun par une couche de matière élastique possédant de préférence une dureté Shore A de 10 à 40.

3. Dispositif d'atténuation sonore suivant la revendication 1,

caractérisé

en ce que l'une des masses additionnelles (22) est disposée sur la face inférieure de l'élément intermédiaire (12) en forme de plaque.

4. Dispositif d'atténuation sonore suivant la revendication 1,

caractérisé

en ce que l'élément intermédiaire (12) est constitué d'une structure creuse en acier, en forme de plaque et résistante, qui est agencée de façon à pouvoir être remplie de grenaille de plomb en tant que masse additionnelle.

5. Dispositif d'atténuation sonore suivant la revendication 2,

caractérisé

en ce que l'élément élastique (60) se trouvant sur la surface supérieure de l'élément intermédiaire (12) en forme de plaque porte une plaque de répartition de pression (63).

6. Dispositif d'atténuation sonore suivant la revendication 2 ou 5,

caractérisé

en ce que l'élément élastique (60) se trouvant sur la surface supérieure de l'élément intermédiaire (12) en forme de plaque a une épaisseur plus faible que l'élément élastique (61) disposé au-dessous de cet élément intermédiaire (12) en forme de plaque.

Fig.1

Fig.2

# Fig.3

# Fig.4

Fig. 5

Fig. 6